Europäisches Patentamt

European Patent Office

Office européen des brevets

(19)

(11)　EP 0 742 614 B1

(12)　FASCICULE DE BREVET EUROPEEN

(45) Date de publication et mention
de la délivrance du brevet:
**19.09.2001　Bulletin 2001/38**

(51) Int Cl.⁷: **H01S 3/06**, G02F 1/39

(21) Numéro de dépôt: **96401013.6**

(22) Date de dépôt: **10.05.1996**

(54) **Oscillateur paramétrique optique monolithique pompé par un microlaser**

Mikrolasergepumpter monolithischer optischer parametrischer Oszillator

Microlaser pumped monolithic optical parametric oscillator

(84) Etats contractants désignés:
**DE FR GB IT**

(30) Priorité: **12.05.1995　FR 9505654**

(43) Date de publication de la demande:
**13.11.1996　Bulletin 1996/46**

(73) Titulaire: **COMMISSARIAT A L'ENERGIE
ATOMIQUE**
**75015 Paris Cédex 15 (FR)**

(72) Inventeurs:
• **Fulbert, Laurent**
**38500 Voiron (FR)**

• **Molva, Engin**
**38000 Grenoble (FR)**
• **Thony, Philippe**
**38000 Grenoble (FR)**

(74) Mandataire: **Moutard, Pascal Jean et al**
c/o Brevatome,
25, rue de Ponthieu
**75008 Paris (FR)**

(56) Documents cités:
**EP-A- 0 523 861**　　**WO-A-90/09688**
**GB-A- 1 566 716**　　**US-A- 5 048 051**
**US-A- 5 181 211**　　**US-A- 5 191 587**
**US-A- 5 394 413**　　**US-E- R E34 812**

**Description**

Domaine technique

L'invention se rapporte au domaine des oscillateurs paramétriques optique.

Les oscillateurs paramétriques optiques (ou OPO) permettent, en faisant interagir un faisceau laser de pompe de forte puissance et un cristal non linéaire, de générer un rayonnement de longueur d'onde plus grande que celle du laser, et dont les caractéristiques spatiales et temporelles sont proches de celles du faisceau de pompe. En modifiant les conditions d'accord de phase du cristal non linéaire (soit par rotation du cristal, soit par changement de température), on peut faire varier de manière continue, et dans une gamme très large, la longueur d'onde du rayonnement émis. Ce dispositif permet donc d'atteindre des gammes de longueur d'onde jusqu'ici inaccessibles avec les lasers classiques.

De manière plus précise, le processus de génération d'un rayonnement de longueur d'onde variable repose sur les phénomènes non linéaires qui apparaissent dans certains matériaux soumis à une forte densité de puissance optique. Un photon de pompe de fréquence $\nu_p$ se décompose en deux photons : le photon de fréquence la plus élevée $\nu_s$ est appelé photon "signal", celui de fréquence plus basse $\nu_i$ est appelé photon "complémentaire" (ou idler). Pour des raisons de conservation de l'énergie, on a la relation $\nu_s+\nu_i=\nu_p$.

Pour réaliser un OPO, le moyen le plus courant est de placer un matériau non linéaire à l'intérieur d'une cavité. Lorsque la cavité est résonnante pour les photons de signal ou d'idler, elle est dite simplement résonnante. Lorsque la puissance de pompe dépasse un certain seuil, le gain est supérieur aux pertes et les photons "signal" sont émis par la cavité.

Pour faire baisser le seuil de fonctionnement de l'OPO, on peut placer le matériau non linéaire dans une cavité doublement ou triplement résonnante (résonance pour le signal et le complémentaire, et/ou la pompe). Les seuils sont alors nettement inférieurs et il est possible de faire fonctionner l'OPO en continu. Par contre, la réalisation de telles cavités et la stabilisation des modes posent des problèmes techniques difficiles et coûteux.

Les OPO ont des applications dans des domaines tels que : télémétrie laser, environnement, instrumentation scientifique et médicale,.... Dans la plupart des applications citées, on a besoin d'un OPO fonctionnant en régime impulsionnel avec des puissances crête de sortie élevées.

Etat de la technique

Un exemple de microlaser est décrit dans le document US-A-5 394 413. Ce microlaser est déclenchable passivement grâce à un matériau absorbeur saturable.

Un exemple d'oscillateur paramétrique est décrit dans la demande WO 90/09688. Cet oscillateur comporte une cavité résonnante comportant un matériau non linéaire. La longueur de la cavité est déterminée de façon que la largeur de la bande de gain du milieu résonnant soit inférieure ou égale à la fréquence de séparation des modes de la cavité et telle que l'une des fréquences correspondant à un mode de la cavité tombe dans la bande de gain.

Le fonctionnement des OPO peut être continu ou impulsionnel.

Dans le cas d'un fonctionnement continu, le matériau non linéaire est placé dans une cavité résonnante et convertit les photons de pompe en photons de longueur d'onde supérieure. Il faut des puissances élevées pour obtenir un bon rendement de conversion. Cela peut être réalisé en continu, mais au détriment de la simplicité, en utilisant des cavités doublement ou triplement résonnantes qui permettent d'augmenter la densité de puissance sur le matériau non linéaire.

Dans le cas d'un fonctionnement impulsionnel, le matériau non linéaire est pompé par un laser émettant des impulsions de faible durée et de forte puissance crête. Les rendements de conversion sont par conséquent nettement supérieurs au cas continu et des cavités simplement résonnantes de conception simple peuvent être utilisées.

Un exemple d'OPO en fonctionnement impulsionnel est donné dans l'article de J.A.C. Terry et al. intitulé "Low Threshold operation of an all-solid-state KTP optical parametric oscillator", paru dans Journal of Optical Society of America, B, vol. 11, n°5, p. 758-769 (1994).

Cet article décrit le fonctionnement d'un OPO simplement résonnant, pompé par un laser déclenché. Le matériau non linéaire est un cristal de KTP de 20 mm de longueur. Le pompage est fait par un laser déclenché YLF:Nd délivrant des impulsions d'une largeur de 18 ns à une longueur d'onde de 1,047μm.

Dans certaines configurations, le seuil de fonctionnement de l'OPO est de 0,7mJ avec un rayon du faisceau de pompe de 230μm, soit une densité de puissance dans le matériau non linéaire de 23 MW/cm$^2$.

Bien que la densité de puissance de seuil de l'OPO décrit dans ce document soit relativement faible, l'énergie de seuil est assez élevée en raison de la durée d'impulsion longue (18 ns) et du rayon de faisceau important (230 μm). Les lasers de pompe délivrant de telles énergies sont coûteux et encombrants. De plus, l'OPO n'est pas monolithique et comporte nécessairement des phases de réglage et d'alignement pour fonctionner correctement : il n'est donc pas fiable. Enfin, sa structure n'est pas adaptée à un procédé de fabrication collective à bas coût.

D'une façon générale, les OPO existant actuellement sont des dispositifs chers et assez encombrants, notamment en raison de la présence d'un laser de pompe de forte puissance.

Exposé de l'invention

L'objet de l'invention est un oscillateur paramétrique optique pompé par un laser déclenché qui permet d'améliorer le dispositif connu afin de diminuer le seuil de fonctionnement de l'OPO et réduire son encombrement.

Une réduction de l'encombrement de l'OPO passe par une réduction de la longueur du cristal non linéaire. Or ceci signifie également une diminution du rendement de conversion de ce dernier.

Par ailleurs, une diminution du seuil de fonctionnement de l'OPO a pour conséquence le pompage du cristal avec des énergies de pompage moins élevées.

Le signal de sortie de l'OPO étant proportionnel au produit du rendement de conversion par l'énergie de pompage, il y a bien incompatibilité à vouloir résoudre les deux problèmes ci-dessus, car leur résolution simultanée devrait entraîner une diminution considérable de l'intensité du signal de sortie de l'OPO.

Cependant, l'invention propose une solution à ce double problème.

A cette fin, elle a pour objet un oscillateur paramétrique optique caractérisé en ce qu'il comporte :

- un matériau non linéaire OPO et deux miroirs disposés de part et d'autre du matériau non linéaire et formant une cavité,
- un microlaser déclenché pour générer un faisceau laser de pompage de la cavité.

Les microlasers solides (ou laser puce) sont des lasers solides pompés par diode et compacts (quelques cm$^3$). Le développement des diodes laser III-V de puissance adaptées au pompage de différents matériaux lasers dopés avec différents dopants permet de réaliser de microlasers dans une gamme de longueur d'onde assez large entre 1-2 microns.

Le microlaser présente une structure en un empilement de multicouches. Le milieu actif laser est constitué par un matériau de faible épaisseur (entre 150-1000µm), et de petites dimensions (quelques mm$^2$), sur lequel des miroirs diélectriques de cavité sont directement déposés.

En raison de la faible longueur de cavité des microlasers déclenchés, la largeur de leurs impulsions est faible (typiquement <1ns ou au plus quelques ns). De même, les dimensions de faisceaux sont réduites. Ceci permet donc d'obtenir une densité de puissance de pompage élevée (en particulier supérieure ou égale à celle donnée dans l'article mentionné ci-dessus), tout en ayant une énergie d'impulsion réduite. L'énergie de seuil s'en trouve réduite. Par ailleurs, le fait de disposer d'une densité de puissance élevée, dans un faisceau de petite section, permet de réduire la taille de l'OPO.

La solution au double problème posé ci-dessus consiste donc bien à choisir un microlaser déclenché comme source de pompage.

A titre d'exemple, pour un microlaser émettant des impulsions de 5µJ, avec une largeur temporelle de 750 ps, et un rayon de faisceau de 65 µm (valeurs typiques couramment rencontrées), la densité de puissance en sortie de microlaser est de 50 MW/cm$^2$, ce qui est supérieur au seuil de l'OPO décrit dans l'article de Terry et al. mentionné en introduction (23 MW/cm$^2$). La taille du matériau non linéaire OPO peut alors être réduite à quelques millimètres, par exemple environ 5 mm, ce qui, par rapport à la taille de l'OPO décrit dans cet article (20 mm), représente une réduction d'un facteur 4 de l'encombrement, ce qui est considérable.

En utilisant un microlaser émettant des impulsions de plus forte énergie (jusqu'à 50 µJ par exemple), la taille du matériau non linéaire OPO peut encore être réduite.

La compacité du système est accrue si les miroirs formant la cavité de l'OPO sont directement déposés sur le matériau non linéaire OPO.

Il est également possible de réaliser un tel oscillateur paramétrique optique, la cavité microlaser comportant un miroir d'entrée et un miroir de sortie, ce dernier constituant également le miroir d'entrée de la cavité de l'OPO.

On obtient alors un dispositif monolithique, compact, compatible avec des procédés de fabrication collective mettant en oeuvre des techniques utilisées en microélectronique.

Selon un autre mode de réalisation, le miroir d'entrée de la cavité OPO peut être transparent à la longueur d'onde émise par le microlaser, le cristal OPO étant disposé dans la cavité microlaser. Dans ce cas, la densité d'énergie à l'entrée de la cavité OPO (énergie de pompage) est encore plus importante.

Si une cavité OPO doublement résonnante est réalisée, le seuil de fonctionnement de l'OPO est encore abaissé.

On peut réaliser des cavités stables avec des miroirs concaves sur les faces du microlaser et/ou du matériau non linéaire. Une cavité stabilisée présente un seuil plus faible et un meilleur rendement. Elle permet de plus d'ajuster la taille du faisceau laser dans le matériau non linéaire.

Selon un mode particulier de réalisation, la cavité microlaser est déclenchée passivement par un absorbant saturable.

Un autre aspect de l'invention concerne la disposition relative de l'absorbant saturable et du milieu actif, à l'intérieur de la cavité microlaser.

Selon ce mode particulier, l'absorbant saturable peut être déposé sous la forme d'une couche mince, directement sur le matériau actif de la cavité microlaser.

Un des avantages principaux de ce mode particulier de réalisation, est dans la structure de la cavité microlaser (ou du microsystème laser consistant en un microlaser associé à de la microoptique) déclenchée, qui consiste alors en un empilement de couches, permettant de garder la possibilité d'une fabrication collective à bas coût. Cette structure multicouches ne remet pas en cause la simplicité et les procédés de fabrication collective, donc à faible coûts, des microlasers, tels qu'ils ont été développés pour les microlasers continus. Elle permet de réaliser des microlasers déclenchés passivement, monolithiques, autoalignés (sans aucun réglage optique) et indéréglables. Cette structure ne nécessite aucune opération de collage (au contraire des solutions consistant à coller l'absorbant saturable sur un autre élément de la cavité microlaser) ni aucune opération complexe d'alignement (au contraire des solutions consistant à disposer l'absorbant saturable sans aucun contact avec les autres éléments de la cavité microlaser).

Un autre avantage du microlaser par rapport au laser "codopé" (un même milieu contenant à la fois les ions actifs laser et les ions de l'absorbant saturable) est qu'on sépare le milieu actif de l'absorbant saturable, mais qu'on évite le collage des deux milieux tout en gardant une structure monolithique. Ainsi, on peut :

- d'une part régler indépendamment les épaisseurs (pendant le dépôt des couches ou par amincissement mécanique après le dépôt des couches) et les concentrations des ions dans les deux milieux,

- d'autre part, grâce à cette séparation, réaliser des lasers déclenchés où le même ion (par exemple Er) peut être utilisé comme ion actif et comme absorbant saturable, avec des concentrations différentes.

Selon un autre aspect de l'invention, la couche mince peut être composée d'un colorant organique en solution dans un solvant polymère. Selon une variante, la couche mince est susceptible d'avoir été déposée par épitaxie en phase liquide.

La cavité microlaser peut également être déclenchée activement.

Dans le domaine des microlasers, une technique de déclenchement actif est décrite dans l'article de J.J. Zayhowski et al., intitulé "Diode-pumped microchip lasers Electro-Optically Q Switched at high pulse repetition rates", paru dans Optics Letters, vol. 17, N°17, pp. 1201-1203, (1992). Cette technique peut être utilisée dans le cadre de la présente invention.

Dans ce document, le déclenchement est réalisé dans une configuration de deux cavités Fabry-Perot couplées. Le milieu actif laser, de longueur $L_1$, forme, avec un miroir d'entrée et un miroir intermédiaire une première cavité Fabry-Perot. Le matériau déclencheur (matériau électrooptique, $LiTaO_3$), de longueur $L_2$, forme, avec le miroir intermédiaire et le miroir de sortie, une deuxième cavité Fabry-Perot. Le déclenchement se fait en modifiant la longueur optique du matériau déclencheur par une action externe : des électrodes de déclenchement sont placées perpendiculairement à l'axe du faisceau laser, de part et d'autre du matériau déclencheur. Si une tension V est appliquée entre ces électrodes, un champ électrique E=V/e, où e est la distance entre les électrodes (ce qui correspond à l'épaisseur du matériau électro-optique) en résulte. L'indice optique $n_2$, et par conséquent la longueur optique $n_2L_2$, du matériau électro-optique est modifié par l'action du champ E. Ceci affecte le couplage des deux cavités Fabry-Pérot et modifie la réflectivité du miroir intermédiaire vu par le milieu laser.

Cependant, cette technique présente des inconvénients.

Tout d'abord, le microlaser décrit dans ce document est fabriqué par un procédé manuel (il met en oeuvre des étapes de collage de morceaux prédécoupés). Ceci impose une limite inférieure pour les dimensions géométriques qui sont au minimum autour de 1mm, et en particulier pour la distance entre les deux électrodes. En outre, un autre problème est la nécessité d'atteindre un champ E suffisant pour le déclenchement. Il est en effet nécessaire d'appliquer une tension de l'ordre de 1000 volts entre les deux électrodes, et ceci en un temps très court (moins de 1 nanoseconde) et sur des puces laser d'environ 1 $mm^3$ de volume. Ceci est très difficile à réaliser en pratique et nécessite une électronique sophistiquée incompatible avec la simplicité et le bas coût de production du microlaser.

Afin de résoudre ce problème, et selon un mode particulier de réalisation de l'invention, le milieu actif laser forme une première cavité résonnante entre un miroir d'entrée et un miroir intermédiaire, un second matériau forme une seconde cavité résonnante entre le miroir intermédiaire et un miroir de sortie, l'indice optique de ce matériau étant apte à être modulé par une perturbation extérieure, et des moyens de réduction de la taille du faisceau laser sont disposés en entrée de la première cavité résonnante, l'ensemble des deux cavités et des moyens de réduction du faisceau laser étant monolithique.

Ainsi, selon ce mode particulier de réalisation, l'invention résout le problème de la tension élevée à appliquer entre les électrodes tout en permettant de diminuer le seuil de la cavité microlaser. En effet, avec cette structure, il est possible de ramener l'épaisseur du second matériau à environ 100µm. Ceci permet, dans le cas d'un matériau électrooptique de limiter la tension nécessaire à une valeur comprise entre 50 et 100 volts. Par ailleurs, le seuil de déclenchement du microlaser se trouve réduit à environ quelques milliwatts. Enfin, cette structure est compatible avec des procédés de fabrication collectifs qui permettent à la fois de fabriquer des échantillons de petite taille et de respecter les coûts de fabrication.

Les moyens de réduction de la taille du faisceau laser peuvent être constitués par un miroir concave réalisé avec un micromiroir sur la face du milieu actif laser destinée à être traversée par le faisceau de pompage.

Le miroir de sortie peut être un miroir concave réalisé avec un micromiroir sur la face de sortie du second matériau.

Les deux cavités Fabry-Pérot peuvent être réalisées de façon à être optiquement stable.

Selon une variante, qui permet d'obtenir un microlaser fonctionnant en mode actif, et ayant une structure encore plus simple, la cavité microlaser est en limite de stabilité optique, et des moyens sont prévus pour faire varier la longueur optique de la cavité de façon à la faire passer d'un état optiquement instable à un état optiquement stable.

Ainsi, on réalise un nouveau déclenchement actif, puisque l'état optiquement instable est un état à fortes pertes de la cavité, au contraire de l'état optiquement stable.

En outre, la structure obtenue est radicalement différente de la structure connue comme par exemple celle décrite dans l'article de J.J. Zayhowski (voir référence ci-dessus), puisqu'il n'y a plus qu'une seule cavité Fabry-Perot.

La cavité peut être une cavité hémisphérique, confocale, concentrique ou sphérique. Dans ce cas, la taille du faisceau dans la cavité est plus faible, et il est alors possible de diminuer les épaisseurs de matériaux employés. La taille du microlaser s'en trouve encore diminuée. Ceci a pour conséquence de permettre de résoudre l'un des problèmes mentionnés ci-dessus, à savoir celui de la valeur importante de la tension à appliquer si le second matériau est un matériau électrooptique : en effet, l'épaisseur de ce dernier diminuant, le même champ électrique est obtenu pour une tension plus faible ($\vec{E} = \Delta V/e$, où e est l'épaisseur entre les électrodes).

Selon un mode particulier de réalisation, la cavité microlaser comporte, outre le milieu actif laser, un second matériau de longueur optique variable. Ceci ne nécessite cependant toujours qu'une seule cavité Fabry-Perot, et non pas deux.

On obtient ainsi une structure très compacte, monolithique.

Les moyens pour faire varier la longueur optique de la cavité peuvent comporter des moyens pour faire varier la longueur du second matériau.

Selon un autre mode de réalisation, le milieu actif laser et le second matériau ont des indices optiques différents et les moyens pour faire varier la longueur optique de la cavité comportent des moyens pour faire varier l'indice optique du second matériau.

Le second matériau peut être un matériau électro-optique.

Ainsi, une seule cavité microlaser est fabriquée, dont on modifie la longueur optique pour déplacer la cavité du domaine instable à forte perte, au domaine stable à faible perte ce qui permet de la déclencher. Il n'est besoin que d'une seule cavité Fabry-Perot, même si elle contient plusieurs matériaux (le matériau actif laser, et le matériau de longueur optique variable).

Lorsque les matériaux sont juxtaposés ou collés ou qu'ils adhèrent l'un à l'autre par adhérence moléculaire, la compacité du système est améliorée, ce qui est très important dans le cas d'un microlaser.

## Brève description des figures

De toute façon, les caractéristiques et avantages de l'invention apparaîtront mieux à la lumière de la description qui va suivre. Cette description porte sur les exemples de réalisation, donnés à titre explicatif et non limitatif, en se référant à des dessins annexés sur lesquels :

- la figure 1 illustre un OPO non conforme à l'invention,
- les figures 2 et 3 représentent divers modes de réalisation de l'invention,
- les figures 4A à 4F illustrent des étapes de réalisation d'un OPO selon l'invention,
- les figures 5 à 11 représentent des microlasers déclenchés activement.

## Description détaillé de modes de réalisation de l'invention

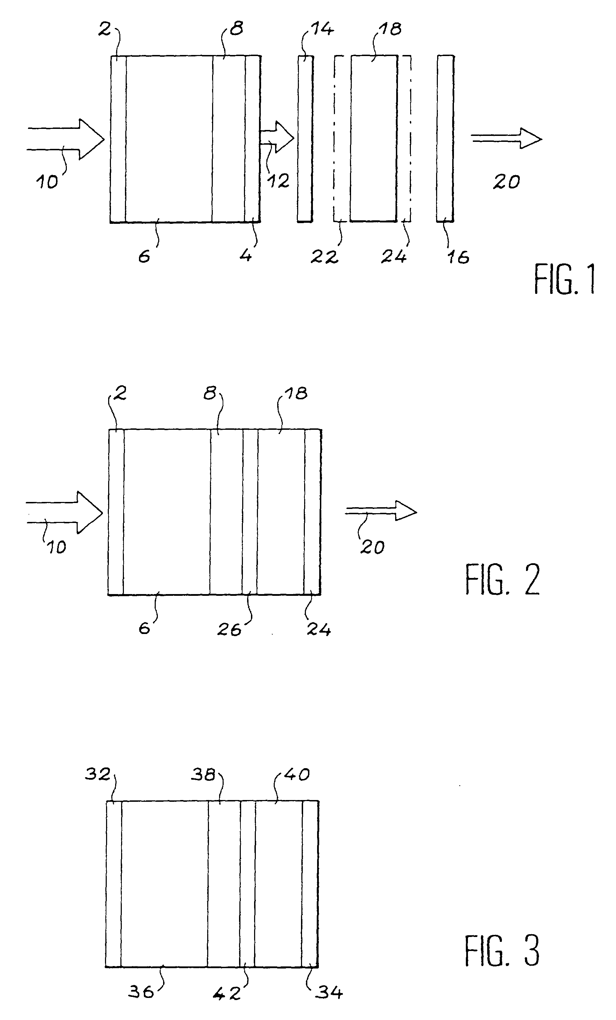

La figure 1 illustre un OPO non conforme à l'invention. Les références 2 et 4 désignent des miroirs d'entrée et de sortie d'une cavité microlaser qui comporte un milieu actif laser 6 et des moyens 8 de déclenchement, en mode actif ou passif, de cette cavité microlaser. La cavité peut être pompée par des moyens non représentés sur la figure, le faisceau de pompage étant désigné par la référence 10. La cavité émet un faisceau laser 12 qui va pomper à son tour une seconde cavité, dite cavité OPO. Cette cavité OPO est délimitée par deux miroirs 14, 16 entre lesquels est placé un matériau non linéaire 18 (par exemple un cristal) permettant de réaliser une cavité d'un oscillateur paramétrique optique. Cette cavité émet à son tour un faisceau OPO 20.

Le matériau constitutif du milieu 18 peut être choisi parmi les matériaux connus, non linéaires, tels que par exemple KTiOPO$_4$ (KTP), MgO:LiNbO$_3$, β-BaB$_2$O$_4$, LiB$_3$O$_5$, et AgGaSe. Les propriétés du matériau KTP sont décrites, par exemple, dans l'article de Terry et al. paru dans Journal of Optical Society of America, B, vol. 11, pages 758-769 (1994). Les propriétés d'autres matériaux non linéaires permettant de réaliser un OPO sont décrite dans l'ouvrage de R.W. Boyd intitulé "Non-linear optics" (Academic Press, 1992, USA, N°ISBN 0-12-121680-2), en particulier pages 85 et suivantes. Les miroirs d'entrée et de sortie de la cavité OPO peuvent également être disposés comme représenté en pointillés sur la figure 1 : dans ce cas deux miroirs 22, 24 sont directement déposés sur les faces d'entrée et de sortie du matériau 18. Cette configuration permet de gagner en compacité et d'obtenir une cavité indéréglable, et qu'il n'est pas nécessaire d'aligner en cours de fonctionnement.

Du fait du pompage par un microlaser, il est possible non seulement d'abaisser l'énergie de seuil de la cavité OPO, mais également de réduire la longueur du cristal 18 nécessaire au fonctionnement de l'OPO ainsi, dans l'article de Terry et al. mentionné ci-dessus, un OPO avec un cristal de 20mm de longueur est décrit, tandis que l'invention permet d'utiliser des matériaux de quelques mm d'épaisseur, par exemple 5 mm. D'une façon générale, du fait des propriétés du faisceau 12 émis par le laser, ce résultat (énergie de seuil abaissée, longueur de cristal réduite) s'applique non seulement au cristal de KTP décrit dans l'article de Terry et al. mais aussi à tout autre cristal ou matériau non linéaire utilisé pour réaliser une cavité OPO.

La compacité du système est encore accrue si, comme illustré sur la figure 2, les miroirs 4 et 14 sont confondus. La structure obtenue est alors une structure extrêmement compacte. Sur la figure 2, des éléments identiques à ceux de la figure 1 sont désignés par les mêmes références numériques et la référence 26 désigne un miroir intermédiaire commun à la cavité microlaser et à la cavité OPO. La cavité microlaser étant elle-même très compacte, même avec un élément de déclenchement 8, il est ainsi possible d'obtenir un oscillateur OPO dont la longueur totale, y compris ses moyens de pompage, ne dépasse pas 6mm, pour une section de 1mm², soit un volume total de 6mm³.

En outre, toutes les structures décrites ci-dessus bénéficient largement des possibilités de fabrication collective des microlasers. Par ailleurs, le dépôt de miroir directement sur le matériau non linéaire 18 est également compatible avec les techniques de fabrication collectives et, par conséquent, l'ensemble de l'appareil est lui-même compatible avec ces techniques collectives, du type de celles qui sont utilisées en microélectronique. Ainsi, on peut réaliser une production de masse à très faible coût.

Le matériau constitutif du milieu actif 6 sera par exemple dopé au néodyme (Nd), pour une émission laser autour de 1,06 $\mu$m. Ce matériau pourra être choisi, par exemple, parmi l'un des matériaux suivants : YAG ($Y_3Al_5O_{12}$), LMA ($LaMgAl_{11}O_{19}$), $YVO_4$, YSO ($Y_2SiO_5$), YLF ($YLiF_4$) ou $GdVO_4$, etc. Ce choix sera conditionné par les critères suivants, mais dépendra également des applications :

- si la cavité laser est pompée optiquement, de préférence avec une ou plusieurs diodes lasers, le matériau doit avoir un fort coefficient d'absorption à la longueur d'onde de la pompe (par exemple, diode laser III-V émettant autour de 800 nm) pour augmenter l'efficacité de pompage, tout en gardant une épaisseur de matériau faible (<1mm).
- une large bande d'absorption à la longueur d'onde de la pompe, par exemple vers 800 nm, pour répondre au problème de la stabilisation en longueur d'onde de la diode laser,
- une forte section efficace d'émission stimulée, pour obtenir des puissances de sortie élevées et de forts rendements,
- une faible largeur de la bande d'émission pour obtenir aisément un laser monofréquence. Ou bien au contraire, une large bande d'émission, pour réaliser une émission laser accordable en fréquence,
- de bonnes propriétés thermomécaniques, pour simplifier l'usinage du matériau et pour limiter les effets thermiques néfastes par une bonne évacuation de la chaleur produite par l'absorption de la pompe (cette chaleur en excès dépendra du rendement énergétique du laser),
- une durée de vie courte dans l'état excité pour une cadence de déclenchement rapide,
- de grandes dimensions pour pouvoir fabriquer simultanément en fabrication collective, le plus grand nombre de microlasers avec un cristal laser.

Parmi les matériaux connus, ceux qui sont les plus adaptés au fonctionnement du microlaser sont (avec des durées de vie comparables de quelques centaines de microsecondes) :

- $YVO_4$, qui présente un bon coefficient et une large bande d'absorption ainsi qu'une bonne section efficace,
- YAG, dont le coefficient d'absorption et la section efficace d'émission stimulée sont moyens et dont les largeurs de bandes d'absorption et d'émission sont faibles. Il se présente sous de grandes dimensions et a une bonne conductivité thermique,
- LMA : ce matériau offre un coefficient d'absorption et une section efficace faibles. Les bandes d'absorption et d'émission sont larges. Il peut en outre présenter de grandes dimensions.

Quant aux ions actifs (dopants), ils sont, en général choisis parmi :

- Nd pour une émission autour de 1,06 $\mu$m,
- Er ou un codopage erbium-ytterbium Er+Yb pour une émission autour de 1,5 $\mu$m,
- Tm ou Ho ou un codopage de thulium et d'holmium pour une émission autour de 2 $\mu$m.

Un autre paramètre est l'épaisseur $\underline{e}$ du milieu actif 6.

L'épaisseur $\underline{e}$ conditionne les caractéristiques du microlaser :

- d'une part, l'absorption du faisceau pompe sera d'autant plus forte que l'épaisseur e sera grande ;
- d'autre part, le nombre de modes longitudinaux d'une cavité Fabry-Pérot augmente avec l'épaisseur et, si on veut réaliser un laser monomode longitudinal, cette épaisseur doit être faible.

Si dg est la largeur de la bande de gain (d'émission laser) du matériau, le nombre de modes N sera donné par :

$$N = dg/dv \text{ avec } dv = \frac{C}{2nL},$$

où C est la vitesse de la lumière et n l'indice de réfraction.

Pour un laser monofréquence, on choisit en général l'épaisseur minimum pour N=1, à condition que cette épaisseur soit >100 μm. Les épaisseurs typiques pour obtenir un seul mode sont :

- YAG L = 750 μm,
- $YVO_4$ L = 500 μm,
- LMA L = 150 μm.

En pratique l'épaisseur $\underline{e}$ variera donc entre 100 μm et environ 1 mm.

Pour réaliser une cavité laser complète, le milieu actif avec l'élément de déclenchement 8 est compris entre deux miroirs 2, 4 (figure 1) ou 2, 26 (figure 2). Le miroir d'entrée 2, déposé par des procédés connus, sera de préférence un miroir de type dichroïque présentant une réflectivité maximum (la plus proche possible de 100%) à la longueur d'onde du laser et une transmission la plus élevée possible (>80%) à la longueur d'onde de la pompe (en général vers 800 nm pour les matériaux dopés Nd, vers 980 nm pour ceux dopés Er et vers 780 nm pour ceux dopés Tm). Le miroir de sortie 4, 26 est également de préférence de type dichroïque mais laisse passer quelques pour cent du faisceau laser.

Dans le cas illustré sur la figure 2, le miroir 26 doit également être réflecteur à la longueur d'onde du faisceau signal de l'OPO, tandis que le miroir 16 est réflecteur à cette longueur d'onde. Dans le cas d'une cavité simplement résonnante, les miroirs 26 et 16 sont transparents à la longueur d'onde du faisceau "Idler". Pour une cavité doublement résonnante, ils sont réflecteurs à cette longueur d'onde.

Le pompage de la cavité microlaser sera préférentiellement un pompage optique. Ainsi, les diodes laser III-V sont particulièrement bien adaptés pour pomper une cavité microlaser.

De façon optionnelle, il est possible de fabriquer par une méthode connue selon l'art antérieur (A. Eda et al., CLEO'92, paper CWG33, p.282 (Conf. on Laser and Electro-optics, Anaheim, USA, May 1992)) un réseau de microlentilles en un matériau transparent (silice,...) sur la surface d'entrée du matériau laser 6. Les dimensions typiques de ces microlentilles sont :

- diamètre de cent à quelques centaines de microns,
- rayons de courbure de quelques centaines de micromètres à quelques millimètres.

Ces microlentilles servent à réaliser des cavités "stables" (la cavité "plan-plan" n'est pas stable) du type plan-concave. Elles permettent également dans le cas d'un pompage optique, de focaliser le faisceau pompe et de diminuer dans les deux cavités (microlaser et OPO) la taille des faisceaux.

La méthode mentionnée ci-dessus peut également permettre de réaliser des microlentilles en sortie de cavité OPO, ce qui permet également de focaliser les faisceaux dans les deux cavités.

La stabilisation des cavités permet d'y diminuer les pertes et d'accroître leur rendement de fonctionnement.

En ce qui concerne la cavité OPO, il est possible d'ajuster les réflectivités des miroirs d'entrée et de sortie de cette cavité (références 14, 16, 22, 24 sur la figure 1 et 26, 24 sur la figure 2) de façon à former une cavité doublement résonnante autour du matériau non-linéaire 18. Le miroir d'entrée 26 doit avoir une réflectivité élevée proche de 100% à $\lambda_{signal}$ pour une cavité simplement résonnante et une réflectivité proche de 100% à $\lambda_{Idler}$ pour une cavité doublement résonnante. Le miroir de sortie 16 a une réflectivité supérieure à 90% à $\lambda_{signal}$ pour une cavité simplement résonnante ou à $\lambda_{Idler}$ pour une cavité doublement résonnante. Ceci permet de diminuer encore le seuil de fonctionnement de la cavité 18.

Un autre mode de réalisation est illustré sur la figure 3. Il n'y a plus cette fois deux cavités séparées (cavité microlaser et cavité OPO) mais une cavité microlaser qui contient la cavité OPO. La cavité microlaser est limitée par deux miroirs d'entrée et de sortie 32, 34 de la cavité microlaser. Elle contient un milieu actif laser 36, un élément 38 de déclenchement de la cavité, un cristal non linéaire 40 qui forme, avec un miroir intermédiaire 42 et le miroir de sortie 34 de la cavité, une "sous-cavité" OPO. A cette fin, le miroir intermédiaire 42 est transparent à la longueur d'onde du faisceau laser, et réfléchissant à la longueur d'onde du faisceau signal de la cavité OPO tandis que le miroir 42 est transparent à $\lambda_{Idler}$ pour une cavité simplement résonnante, et réfléchissante à $\lambda_{Idler}$ pour une cavité doublement résonnante. Le miroir 34 est partiellement transparent à la longueur d'onde du faisceau signal de la cavité OPO. Ce mode de réalisation permet de disposer d'une densité d'énergie encore plus importante à l'intérieur de la cavité OPO tout en gardant le bénéfice d'une structure extrêmement compacte et monolithique.

Selon un mode particulier de réalisation, la cavité microlaser est déclenchée passivement. Dans ce cas, l'élément déclencheur 8, 38 est un élément absorbant saturable.

Selon un mode particulièrement avantageux, l'absorbant saturable se présente sous la forme d'une couche mince. En particulier, il peut être avantageux de déposer la couche mince d'absorbant saturable directement sur le milieu amplificateur laser.

Deux types de couches minces peuvent être utilisés :

- un polymère contenant les molécules d'absorbant saturable. Typiquement pour un microlaser à 1,06 µm, on pourra utiliser, en tant qu'absorbant saturable, un colorant organique comme le bis(4-diéthylaminodithiobenzyl)nickel (BDN, Kodak, CAS N°51449-18-4) dans une solution contenant, en masse, 6% de poly(méthylméthacrylate) (PMMA) dans du chlorobenzène.

Des variantes sont décrites plus loin, en liaison avec la description d'un procédé de préparation.

Ce type de solution sera déposé à la tournette, directement sur le matériau laser (voir plus loin pour le procédé de préparation). On réalise ainsi des couches minces ayant une épaisseur de l'ordre de 1 à 5 µm par exemple 2µm, 3µm, 4µm.

- un autre type de couches minces sera obtenu par épitaxie en phase liquide (EPL), directement sur le matériau laser ou par tout autre procédé permettant de réaliser le même dépôt (même matériau, même dopage, mêmes propriétés) : la couche mince sera donc, de façon plus générale, susceptible d'avoir été obtenue par EPL. Le procédé de préparation par EPL est décrit plus loin et permet d'obtenir, sur le substrat constitué par le milieu actif solide, une couche d'épaisseur comprise entre 1 µm et 500 µm (par exemple : 100µm, 200µm, 300µm, 400µm). Elle est constituée d'un matériau de base identique au matériau de base du milieu actif solide (par exemple YAG), mais elle est dopée avec des ions lui conférant des propriétés d'absorbant saturable, par exemple du $Cr^{4+}$ pour un laser à 1,06 µm ou du $Er^{3+}$ pour un laser autour de 1,5 µm.

En fait, on adapte le type de dopant au laser que l'on veut déclencher, afin que la couche épitaxiée présente une absorption saturable à la longueur d'onde d'émission de ce laser.

Par conséquent, dans ce cas, le matériau actif laser et la couche d'absorbant saturable sont de même structure cristalline et ne se différencient que par les différents dopants qui affectent les propriétés cristallines et optiques de ces deux milieux.

Les propriétés de la couche mince, dans l'un et l'autre cas, seront très différentes.

Ainsi, on définit pour chaque type de couche, le seuil de dommage. Au-delà d'une certaine densité de puissance présente dans la cavité laser, on peut détruire la couche mince d'absorbant saturable. Cette densité de puissance limite, appelée seuil de dommage sera plus faible dans le cas du polymère avec colorant organique que dans le cas de la couche mince déposée par EPL. Dans le premier cas, il faudra donc travailler avec des énergies déposées dans la cavité plus faibles que dans le second cas.

D'autre part, dans un cas, la différence d'indice entre le matériau laser et le polymère introduit une interface optique entre les deux milieux. Dans l'autre cas, on ne peut faire l'EPL que sur le même matériau (par exemple YAG sur YAG, seul le dopage étant différent), ce qui permet d'ajuster l'indice de la couche épitaxiée à celle du milieu actif laser (qui sert de substrat d'épitaxie) et, donc, d'éviter la formation d'une interface optique entre les deux milieux.

Enfin, la nature de la couche mince influera sur la forme temporelle de l'impulsion laser. Dans le cas du colorant organique en solution dans un polymère, le temps de déclin du colorant est très court (~1ns), alors que dans le cas de la couche épitaxiée les ions constituant les impuretés ($Cr^{4+}$, $Er^{3+}$) ont des temps de déclin un peu plus long (de l'ordre de quelques nanosecondes). Ces propriétés conditionneront évidemment le choix de la couche mince en fonction de l'utilisation prévue.

La structure qui vient d'être décrite (absorbant saturable sous forme de couche mince déposée directement sur le milieu actif laser) permet d'obtenir une cavité microlaser compacte, ne nécessitant aucun alignement, ne nécessitant l'introduction d'aucun élément parasite tel qu'une colle optique, et permet en outre de ne pas recourir au codopage d'un même milieu de base pour former, à partir de ce même milieu de base, le milieu actif laser et le déclencheur passif.

Un procédé de fabrication d'un OPO selon la présente invention, avec microlaser déclenché passivement, va maintenant être décrit, pour réaliser une structure conforme à celle de la figure 2.

On peut distinguer, dans un tel procédé, les étapes suivantes :

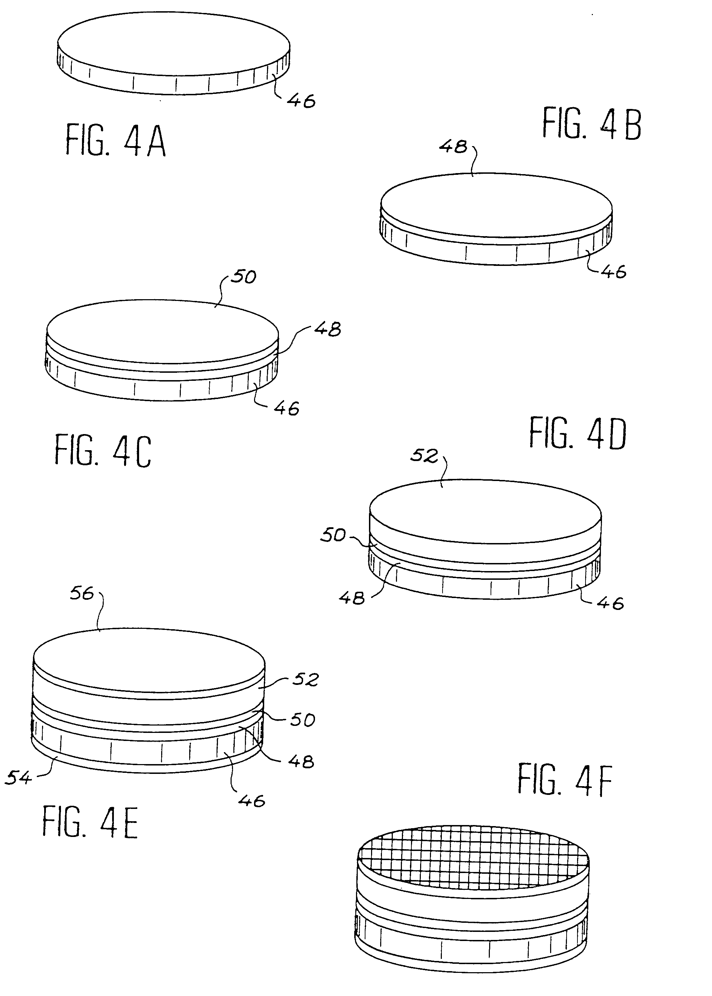

1) - le matériau actif laser est choisi et conditionné : il est orienté et découpé en lames 46 d'épaisseur comprise entre 0,5 et 5mm (figure 4A). Les lames sont ensuite rodées et polies, ce qui permet d'atteindre l'épaisseur finale e voulue,

2)- une étape de préparation de l'absorbant saturable 48 (figure 4B),

2a) Dans le cas d'un absorbant saturable classique, divers procédés sont connus, qui permettent de réaliser une cavité microlaser déclenchée. En particulier, il est possible de réaliser un codopage du matériau de base du milieu actif laser, afin de lui conférer des propriétés de milieu actif laser et d'absorbant saturable (par exemple, YAG dopé avec des ions néodyme $Nd^{3+}$ et chrome $Cr^{4+}$).

2b) Dans le cas d'un absorbant saturable déposé sous forme de couche mince, deux types de dépôt peuvent être réalisés :

2b1) - <u>1er type de dépôt : dépôt d'un colorant organique absorbant saturable, en solution dans un polymère.</u>

Typiquement, pour un microlaser fonctionnant à 1,06 µm, on peut utiliser, comme absorbant saturable un colorant organique comme le bis(4-diéthylamino-dithiobenzyl)nickel (BDN, Kodak, CAS N° 51449-18-4) dans une solution de poly (méthylméthacrylate) (PMMA).

Pour cela, on prépare une solution contenant en masse 6% de poly(méthylméthacrylate) (PMMA, masses moyennes Polyscience) dans du chlorobenzène (Prolabo) en agitant 24 heures. On y rajoute 0,2% en masse de BDN et on agite encore 2 heures. La solution est ensuite filtrée et déposée sur le substrat, sur la face de sortie au goutte à goutte avec un mouvement circulaire centrifuge. On peut utiliser pour ce dépôt à la "tournette" une machine standard telle que celle utilisée en microélectronique pour le dépôt des résines servant aux opérations de lithogravure. Le substrat est préalablement nettoyé de toutes les traces d'impuretés résultant du polissage. Il est mis en rotation (tournette) pendant 20 secondes à 2000 tours/minute, puis pendant 30 secondes à 5000 tours/minute. La couche est enfin mise à sécher 2 heures dans un four à 70°C.

On obtient ainsi un film de 1 μm d'épaisseur contenant 3% de molécules actives (BDN) et dont la densité optique est de 0,13 à 1,06 μm (74% de transmission) avant saturation.

En variant les paramètres de concentration du polymère, sa masse moléculaire ou son solvant, la proportion de colorant ainsi que la vitesse de rotation de la tournette, on peut ajuster les performances de l'absorbant saturable. Les spécifications obtenues typiquement sont :

- épaisseur du film : 1 à 5 μm (par exemple 2μm, 3μm, 4μm),
- densité de molécules :      5 à 10% en masse,
- colorant :        BDN, mm=685g,
- transition vitreuse :      Tg=78°C,
- absorption à 1,06 μm :      10 à 70%,
- taux de saturation :        90%,
- section efficace :      $10^{-16}cm^2$,
- intensité de saturation :      0,1 à 1 MW/cm$^2$,
- non-uniformité du film :      <5% sur 1cm$^2$,
- taux de dépolarisation :      $<10^{-5}$,
- pertes à 800 nm :      <1%,
- fréquence de récurrence :      10-10000 Hz,
- photostabilité :      $10^8$ coups,
- technique de dépôt :      tournette.

D'autres polymères tels que le poly(vinylalcool) ou le poly(vinylacétate) ou encore poly(styrène) peuvent être employés dans leurs solvants respectifs) à la place du PMMA. On peut aussi utiliser le bis(4-diméthylaminodithiobenzyl)nickel (BDN, Kodak, CAS N°38465-55-3) comme colorant.

Le colorant peut aussi être incorporé dans un gel de silice ou bien greffé à même la chaîne de polymère.

De nombreux autres complexes métalliques de dithiene peuvent servir de colorant pour d'autres longueurs d'onde, comme décrit dans les articles de K.H. Drexhage et al., Optics Communication 10(1), 19(1974) et de Mueller-Westerhoff, Mol. Cryst. Liq. Cryst. 183, 291 (1990).

La technique peut aussi être employée pour le déclenchement de lasers fonctionnant à d'autres longueurs d'ondes que 1,06 μm. On déclenchera par exemple des lasers à Er ou Er+Yb (matériaux dopé Er ou Er+Yb où l'ion actif est Er) émettant autour de 1,5 μm avec du tétraéthyloctahydrotétraazapentaphène-dithiolato-nickel (voir article de Mueller-Westerhoff cité ci-dessus).

2b2) - 2ème type de dépôt : dépôt d'une couche mince par épitaxie en phase liquide (EPL).

La couche A.S. (absorbant saturable) est obtenue par trempe du substrat, sur lequel on la dépose, dans une solution sursaturée convenablement choisie. Cette solution, ou bain d'épitaxie est un mélange d'un solvant et d'un soluté constitué de différents éléments formant le matériau final. Le substrat et la couche sont de même structure cristalline et ne se différencient que par les différents dopants qui affectent les propriétés cristallines et optiques de la couche. Les ions actifs tels Nd, Er, Yb rendent le matériau amplificateur, d'autres ions (Cr, Er) lui confèrent des propriétés d'A.S. et certains autres peuvent être utilisés pour faire varier l'indice de réfraction ou la maille cristalline du matériau (par exemple Ga, Ge, Lu, ...). Il est ainsi possible de contrôler les propriétés des couches réalisées.

Ce procédé peut s'appliquer à tout matériau existant sous forme de monocristaux (pour la réalisation des substrats) et pouvant être préparés par épitaxie en phase liquide. C'est le cas des matériaux cités plus haut pour le matériau de base du milieu actif laser : $Y_3A_{15}O_{12}$ (YAG), $Y_2SiO_5$ (YSO), $YVO_4$, $YLiF_4$ (YLF) ou $GdVO_4$. La composition du bain (choix du solvant et des substituants), les concentrations dans le soluté des différents oxydes et les conditions expérimentales de croissance (gamme de températures, mode opératoire, ...) sont ajustées pour chaque matériau afin d'obtenir des couches présentant la meilleure qualité cristalline possible.

Dans le cas des grenats (YAG), le solvant choisi est un mélange $PbO/B_2O_3$ et le soluté comprend un excès de $Al_2O_3$ afin de stabiliser la phase grenat. Le rapport soluté/solvant est alors calculé de façon à obtenir une croissance vers 1000°C.

En fonction de la composition du bain, de la température et du temps de dépôt, on peut ajuster l'épaisseur (1≤e≤200 μm, par exemple : 25μm, 50μm, 75μm, 100μm, 125μm, 150μm, 175μm ; il est possible également de réaliser e≥200μm) et la concentration en dopants dans les couches. La croissance d'une couche a lieu à température constante, ce qui permet d'obtenir une concentration en dopant homogène dans l'épaisseur de la couche. Le substrat est animé d'un mouvement de rotation uniforme ou alternée, ce qui permet une bonne homogénéité d'épaisseur.

On peut réaliser un substrat portant une ou deux couches d'A.S. suivant que l'on trempe une face du matériau actif laser dans le bain, en surface de celui-ci, ou les deux faces, le matériau laser étant totalement immergé dans le bain.

La (ou les) face(s) épitaxiée(s) obtenue(s) peu(ven)t être repolie(s) afin d'enlever une rugosité provoquée éventuellement par le procédé d'épitaxie et d'amener l'épaisseur de la (ou des) couche(s) épitaxiée(s) à l'épaisseur voulue pour le fonctionnement du microlaser.

3) - Une étape de dépôt du miroir de sortie 50 de la cavité microlaser (figure 4C). Il peut s'agir d'un miroir dichroïque, obtenu par un dépôt de multicouches diélectriques, procédé connu de l'homme du métier et commercialement disponible. Dans le mode de réalisation de la figure 2, ce miroir sert à la fois de coupleur de sortie de la cavité laser et de miroir d'entrée de la seconde cavité contenant le matériau non linéaire.

4) - Une étape de dépôt du matériau non linéaire ou cristal OPO 52 (figure 4D). Les techniques de découpe de ce cristal, notamment l'orientation à donner à ce dernier en fonction de la longueur d'onde voulue pour le faisceau signal, sont décrites dans l'ouvrage de R.W. Boyd intitulé "Non linear Optics", (Academic Press, 1992, USA, N° ISBN 0-12-121680-2), p. 85-90.

5) - Une étape de dépôt de miroirs sur les deux faces de l'assemblage (figure 4E : miroir d'entrée 54 dichroïque, avec une réflectivité importante à la fréquence du laser, une transmission élevée à la longueur d'onde de la diode laser de pompe, le miroir de sortie 56 étant le coupleur de sortie de la cavité OPO).

6) - Une étape de découpe des lames pour obtenir des puces microlasers (figure 4F).

Les plaquettes comportant les miroirs, l'absorbant saturable, le milieu actif laser, le cristal OPO et éventuellement les microlentilles sont découpées par une scie diamantée (de type de celles qui sont utilisées en microélectronique pour la découpe des puces Si), pour obtenir les puces laser de quelques mm$^2$ de section.

Pour réaliser une structure selon, par exemple, la figure 1, l'homme du métier saura adapter l'ordre des étapes ci-dessus (il faut de plus réaliser un miroir supplémentaire). Pour une structure selon la description faite ci-dessus en liaison avec la figure 3, il faut adapter les caractéristiques spectrales du miroir intermédiaire 42, ainsi qu'il a déjà été expliqué ci-dessus.

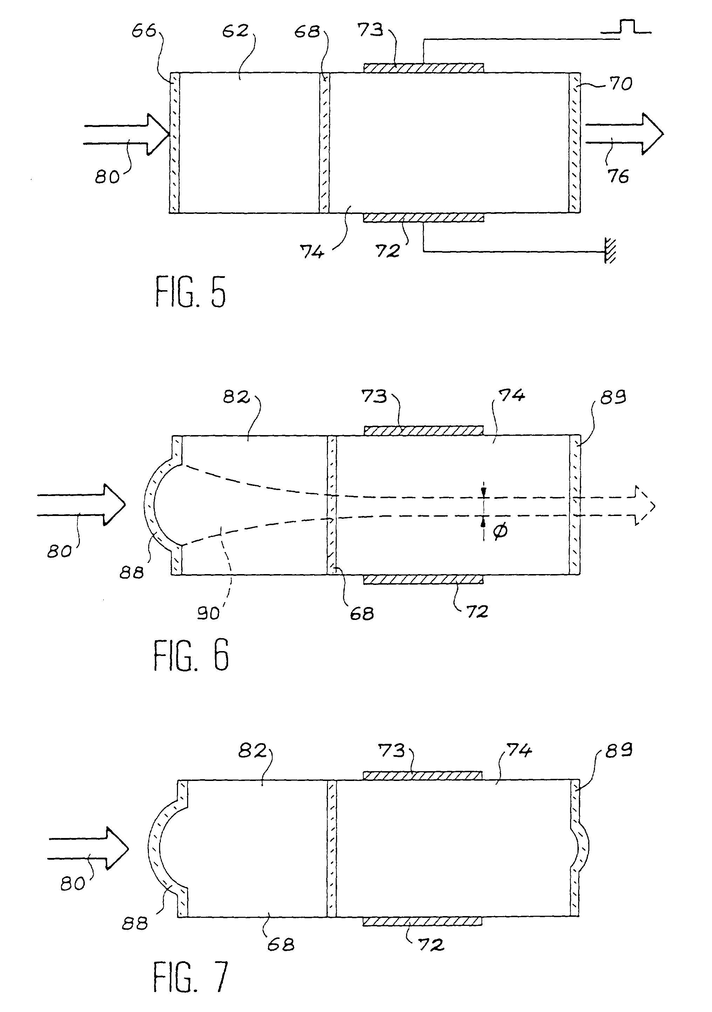

Selon un autre mode de réalisation de l'invention, la cavité microlaser et le microlaser sont déclenchés de manière active. Un exemple d'une telle structure microlaser est illustré sur la figure 5 (la cavité OPO n'est pas représentée sur cette figure 5) où la référence 62 désigne le milieu actif laser, qui forme une première cavité résonnante entre un miroir d'entrée 66 et un miroir intermédiaire 68. Une seconde cavité résonnante est formée entre le miroir intermédiaire 68 et le miroir de sortie 70. Cette seconde cavité résonnante comporte un élément 74 dont l'indice optique est apte à être modulé par une perturbation extérieure ; en particulier, ce matériau peut être un matériau électrooptique, par exemple constitué par du LiTaO$_3$. Une tension de commande externe peut être appliquée à des électrodes 72, 73, et l'application de cette tension entraîne l'établissement d'un champ électrique dans le matériau 74 et une modification de l'indice de ce matériau. Cette modification affecte le couplage des deux cavités et modifie la réflectivité du miroir intermédiaire 68 vu par le milieu actif laser.

Ce mode de réalisation peut encore être perfectionné en ajoutant des moyens de réduction de la taille du faisceau laser, ces moyens étant disposés en entrée de la première cavité résonnante, l'ensemble des deux cavités et des moyens de réduction du faisceau laser étant monolithique. Ce perfectionnement est représenté sur les figures 6 et 7, où des éléments identiques ou correspondant à ceux de la figure 5 sont désignés par les mêmes références. Des moyens de réduction de la taille du faisceau laser 90 sont désignés sur chacune de ces figures par la référence 88. Sur ces figures, ces moyens sont en fait constitués par un micromiroir 88 formé sur la face du matériau actif laser 82 qui est destinée à être traversée en premier par le faisceau de pompage 80.

Avec cette structure, il est possible de ramener l'épaisseur globale du microlaser, et en particulier l'épaisseur du matériau 74 à environ 100μm. Ceci permet, dans le cas d'un matériau électrooptique 74, de limiter la tension nécessaire à appliquer entre les électrodes 72, 73 à une valeur comprise entre 50 et 100 volts ; au contraire, dans le mode de réalisation de la figure 5 (tous les miroirs du microlaser sont plans) des tensions importantes (pouvant atteindre plusieurs centaines de volts, voire 1000 volts) doivent être appliquées entre les électrodes 72, 73 pour pouvoir obtenir une variation d'indice suffisante permettant de déclencher la cavité. Lorsque des moyens de réduction de la taille du faisceau laser dans la cavité sont prévus, le seuil de déclenchement du microlaser est réduit à environ quelques milliwatts.

De préférence, le rayon de courbure du micromiroir 88 est supérieur à la longueur totale du microlaser (longueur $L_1$ du milieu actif 82 + longueur $L_2$ du milieu 74). Typiquement, le rayon de courbure sera supérieur à environ 1,5-2mm. Avec cette condition, on obtient une cavité stable optiquement, et un diamètre Φ du faisceau laser 90, à l'intérieur du milieu 74, relativement petit, typiquement de l'ordre de quelques dizaines de micromètres (contre environ 120μm dans le mode de réalisation de la figure 5).

Il est également possible de réaliser, comme illustré sur la figure 7, une structure dans laquelle un micromiroir concave 89 est prévu en sortie de la deuxième cavité. De plus, les rayons $R_1$ et $R_2$ de chacun des micromiroirs 88, 89 peuvent être choisis de façon à obtenir deux cavités stables optiquement. Cette condition est en fait remplie pour : $R_1 > L_1$ et $R_2 \geq L_2$. Le cas de la cavité plan concave de la figure 6 correspond à R2=α.

Il est également possible d'utiliser, comme mi-

lieu d'indice $n_2$ variable, de manière alternative à l'élément électrooptique 74 :

- soit un matériau magnétooptique dont l'indice $n_2$ est modifié en réponse à un champ magnétique externe, par exemple à l'aide d'un électroaimant situé à proximité de ce matériau,
- soit un matériau dont l'indice est fonction des variations de température ou des variations de pression imposées à l'extérieur.

Les structures de microlaser décrites ci-dessus peuvent être combinées avec une cavité OPO, comme déjà décrit ci-dessus en liaison avec les figures 2 et 3.

Une autre structure de microcavité laser déclenchée activement va maintenant être présentée.

Par rapport à la structure présentée ci-dessus (double cavité Fabry-Pérot, figures 5 à 7), la structure de la microcavité laser obtenue est beaucoup plus simple, et résout le problème de la complexité des structures connues de microlasers fonctionnant en mode actif. En outre, la structure obtenue permet, comme le mode de réalisation décrit en liaison avec les figures 5 à 6, de diminuer la tension de commande à utiliser, lorsqu'un matériau électrooptique est mis en oeuvre.

Selon ce mode de réalisation, la cavité microlaser comporte un milieu actif laser et deux micromiroirs formant une cavité Fabry-Pérot, cette cavité est en limite de stabilité optique, et des moyens sont prévus pour faire varier la longueur optique de la cavité microlaser de façon à la faire passer d'un état optiquement instable à un état optiquement stable.

Ainsi, un nouveau déclenchement actif est réalisé, puisque l'état optiquement instable est un état à forte perte de la cavité au contraire de l'état optiquement stable. Cette structure est radicalement différente des structures connues, puisqu'il n'y a plus qu'une seule cavité Fabry-Pérot.

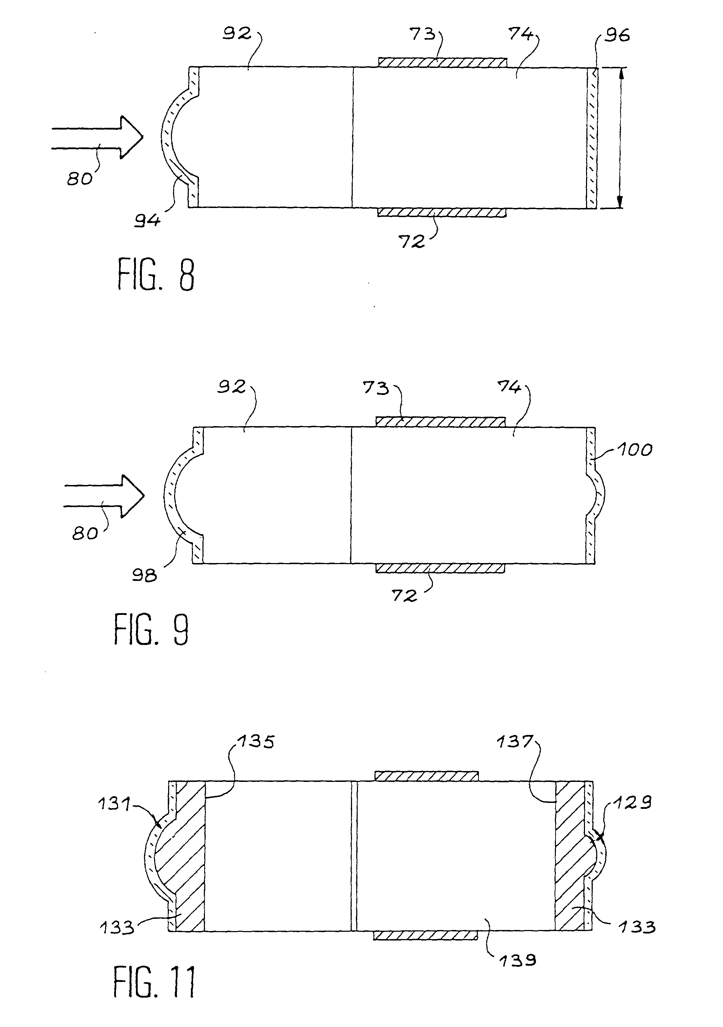

Ce mode de réalisation est illustré sur les figures 8 et 9. Sur ces figures, les références 72, 73, 74, 80 désignent des éléments identiques à ceux des figures 5 à 7, qui sont désignés par les mêmes références. Par ailleurs, la référence 92 désigne le milieu actif laser, les références 94 et 98 un miroir d'entrée de la microcavité laser et les références 96, 100 un micromiroir de sortie de la microcavité laser. Les milieux 92 et 74 peuvent être en contact l'un avec l'autre, une couche antireflet pouvant être déposée à l'interface 92-74. La cavité microlaser représentée sur la figure 8 est une cavité hémisphérique, en limite de stabilité. Il s'agit d'une seule et unique cavité réalisée avec un matériau laser, et un autre matériau dont on peut faire varier l'indice optique par une tension de commande externe. Contrairement au cas des deux cavités couplées, décrites ci-dessus en liaison avec les figures 5 à 7, ces matériaux forment une seule et unique cavité Fabry-Perot. Les deux matériaux 92 et 74 peuvent être en contact par collage ou par adhérence moléculaire. A la jonction de ces deux matériaux, il peut exister une faible réflectivité de quelques % due aux différences d'indices optiques des deux matériaux, mais cette réflectivité faible ne permet pas d'obtenir une résonance suffisante pour coupler les deux cavités en résonance, comme dans les systèmes décrits dans l'art antérieur.

Le mode de réalisation de la figure 9 diffère de celui de la figure 8 en ce que le miroir de sortie 100 est un miroir concave, de rayon de courbure $R_2$.

Il reste à déterminer les caractéristiques des miroirs de façon à réaliser une cavité, par exemple confocale (avec deux miroirs concaves comme sur la figure 9) ou hémisphérique (plan concave, comme sur la figure 8), à la limite de la stabilité.

Dans le cas de la cavité hémisphérique, la stabilité sera obtenue pour $R_1 \geq L+(n_1/n_2-1)L_2$, avec $L=L_1+L_2$.

Dans le cas de la cavité confocale, la stabilité est obtenue pour :

$$R_1 \geq L+(n_1/n_2-1)L_2$$

$$R_2 \geq L+(n_2/n_1-1)L_1$$

Enfin, pour la cavité concentrique ou sphérique, la condition relative à la stabilité est :

$$R_1 = R_2 = \frac{n_1L_2 + n_2L_1}{n_1 + n_2}$$

Dans chaque cas, il est possible de faire varier soit l'indice $n_2$, soit l'indice $n_1$, soit l'une des longueurs $L_1$ ou $L_2$ de façon à satisfaire à l'inégalité correspondante pour amener la cavité dans un état stable. La variation de l'un de ces paramètres est obtenue par des moyens de commande externes. Comme, par ailleurs, l'état optiquement stable de la cavité correspond à un état à faible pertes et l'état optiquement instable à un état à fortes pertes, on a ainsi un nouveau moyen de déclencher activement une cavité.

Dans le cas des modes de réalisation illustrés sur les figures 8 et 9, l'indice $n_2$ du milieu électrooptique est modulé par l'application d'un champ électrique.

De manière alternative, afin de modifier la longueur optique de la cavité, il est possible de remplacer le matériau électrooptique 74 par :

- un matériau magnétooptique dont l'indice est modifié en réponse à un champ magnétique externe, par exemple à l'aide d'un électroaimant situé à proximité de ce matériau,
- un matériau dont l'indice $n_2$ dépend de la pression, la variation d'indice étant obtenue par une variation de pression.

Par ailleurs, il est possible de modifier la longueur géométrique totale de la cavité en montant le miroir de sortie sur des moyens piézoélectriques. Ceci conduit également à une variation commandée de la longueur optique de la cavité microlaser, et permet de faire passer celle-ci d'un état optiquement instable à un état optiquement stable.

Le fait d'utiliser une cavité hémisphérique, confocale, concentrique ou sphérique permet de concentrer le faisceau microlaser à l'intérieur du matériau électrooptique 74, dans le cas où un tel matériau est utilisé. La section du faisceau microlaser étant diminuée, il est possible de diminuer l'épaisseur du matériau d'indice $n_2$. Dans le cas où l'on utilise un matériau électrooptique définissant avec le matériau laser une cavité unique, on peut donc diminuer la distance nécessaire entre les électrodes de contact 72, 73 pour obtenir le champ E nécessaire à la modulation de l'indice $n_2$. La tension appliquée aux électrodes pour obtenir le même champ E s'en trouve diminuée d'autant.

Les structures de microlaser décrites ci-dessus peuvent être combinées avec une cavité OPO comme déjà décrit ci-dessus en liaison avec les figures 2 et 3.

Un procédé de fabrication d'un OPO selon la structure de la figure 2, avec microlaser déclenché activement, va être décrit.

Ce procédé comporte les mêmes étapes 1 et 3 à 6 que décrites ci-dessus en liaison avec les figures 4A à 4E pour la préparation d'OPO avec absorbant saturable.

La différence réside dans l'étape 2, puisqu'il s'agit maintenant de réaliser un déclenchement actif dans le microlaser.

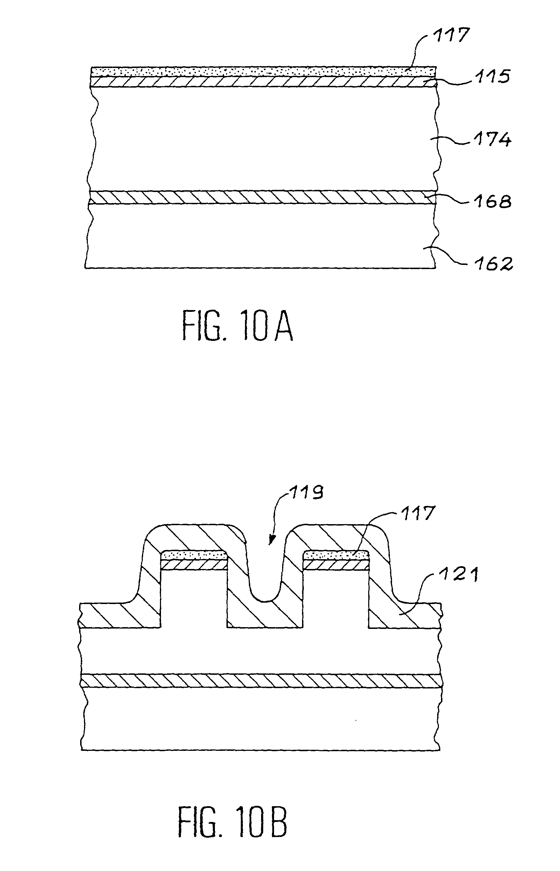

Dans le cas d'une structure microlaser avec deux cavités Fabry-Pérot couplées (figures 5 à 7), un miroir intermédiaire 168 est déposé sur le matériau laser 162 (figure 10A). Puis on dépose sur ce miroir une lame 174 d'un matériau d'indice variable, par exemple un matériau électro-optique (LiTaO$_3$). Ultérieurement, après l'étape 3 et avant l'étape 4, il est procédé aux étapes 3'-1 à 3'-4 de formation des électrodes de commande 72, 73 :

> 3'-1°) - On protège la face de sortie 115 du microlaser par un dépôt de résine 117.
>
> 3'-2°) - On réalise des rainures 119 (figure 10B) dans le matériau électro-optique à l'aide d'une scie à lame diamantée utilisée en micro-électronique, pour pouvoir réaliser par la suite les électrodes avec l'espacement voulu.
>
> 3'-3°) - Il est ensuite procédé au dépôt de contacts électriques par évaporation (par exemple, dépôt d'une couche Cr-Au 121 qui enrobe la résine 117 et le matériau électrooptique).
>
> 3'-4°) - Il y a ensuite décapage chimique de la résine de protection 117 pour laisser subsister des métallisations de part et d'autre du matériau électrooptique.

Dans le cas d'un microlaser comportant une cavité Fabry-Pérot unique (figures 8 et 9), on ne réalise pas le dépôt du miroir intermédiaire 168. Une couche antireflet peut alors être déposée à l'interface lame matériau laser lame matériau électrooptique. Les deux lames sont ensuite collées à l'aide d'une colle optique ou assemblées par tout autre procédé, par exemple par adhérence moléculaire.

Lorsque des micromiroirs doivent être formés sur une des faces de la cavité, on procède par photolithographie (insolation d'une résine photosensible par rayonnement U.V., à travers un masque, puis révélation chimique de la résine) et usinage par faisceau d'ions.

Dans les deux cas ci-dessus de déclenchement actif (double cavité et une seule cavité), il est possible selon une variante de fabriquer les micromiroirs avec un masque à densité variable. Par ailleurs, comme illustré sur la figure 11, des micromiroirs 129, 131 (plans ou concaves) peuvent être réalisés sur un matériau 133 comme le verre ou la silice, transparent à la longueur d'onde du laser. Ces substrats avec les micromiroirs peuvent ensuite être accolés sur les faces d'entrée 135 du milieu laser et de sortie 137 du matériau électrooptique 139.

Dans tous les modes de réalisation décrits ci-dessus (quel que soit le mode de déclenchement et l'arrangement cavité microlaser-cavité OPO), la longueur d'onde d'émission de l'OPO peut être ajustée continûment en faisant varier la température du matériau non linéaire. Un dispositif pour réaliser ce contrôle de la température peut être un dispositif fonctionnant sur la base de l'effet Peltier, comme décrit dans "Stabilization and tuning of a doubly resonant OPO", D. Lee et al., J. Opt. Soc. Am. B, vol. 10, N°9, Sept. 93, pp. 1659-1667.

**Revendications**

1. Oscillateur paramétrique optique monolithique comportant :

    - un matériau non linéaire OPO (40) et deux miroirs (42, 34) disposés de part et d'autre de ce matériau non linéaire, le matériau et les miroirs formant une cavité OPO,
    - un microlaser déclenché (36,38,32,34) pour générer un faisceau laser de pompage de la cavité OPO, ledit microlaser ayant un milieu actif et une cavité formée entre un miroir d'entrée (32) et un miroir de sortie (34) et étant déclenché passivement par un matériau absorbant saturable (38),
    - la cavité OPO étant incluse à l'intérieur de la cavité laser, le miroir de sortie du microlaser (34) étant confondu avec le miroir de sortie (34) de la cavité OPO, le miroir d'entrée (42) de la cavité OPO étant transparent à la lumière émise par le laser et réfléchissant de la lumière émise par la cavité OPO.

2. Oscillateur paramétrique optique selon la revendication 1, les deux miroirs (42,34) formant la cavité de l'OPO étant déposés directement sur le matériau non linéaire OPO.

3. Oscillateur paramétrique optique selon l'une des revendications précédentes, les réflectivités des miroirs (42,34) de la cavité OPO étant ajustées pour former une cavité doublement ou triplement résonnante.

4. Oscillateur paramétrique optique selon l'une des revendications précédentes, la cavité OPO étant stabilisée.

5. Oscillateur paramétrique optique selon l'une des revendications précédentes, l'absorbant saturable (38), ayant la forme d'une couche mince de matériau absorbant saturable directement déposée sur le milieu actif solide.

6. Oscillateur paramétrique optique, selon la revendication 5, la couche mince étant composée d'un colorant organique en solution dans un solvant polymère.

7. Oscillateur paramétrique optique selon la revendication 6, le colorant organique étant choisi parmi le bis(4-diéthylaminodithiobenzyl)nickel ou le bis (4-diméthylaminodithiobenzyl)nickel et le solvant étant une solution de poly(méthyméthacrylate) (PMMA), de poly(vinylalcool) ou de poly(vinylacétate) ou de poly(styrène).

8. Oscillateur paramétrique optique selon l'une des revendications 6 ou 7, la couche mince étant susceptible d'avoir été déposée par épitaxie en phase liquide.

9. Oscillateur paramétrique optique selon la revendication 8, la couche mince étant composée d'un matériau de base, identique à celui du milieu actif solide et dopé avec des ions $Cr^{4+}$ ou $Er^{3+}$.

10. Oscillateur paramétrique optique selon l'une des revendications précédentes, des moyens étant prévus pour faire varier la longueur d'onde d'émission de l'OPO.

11. Oscillateur paramétrique optique selon la revendication 10, la longueur d'onde étant ajustée en faisant varier la température du matériau OPO.

12. Oscillateur paramétrique optique monolithique comportant :

- un matériau non linéaire OPO (40) et deux miroirs (42,34) disposés de part et d'autre de ce matériau non linéaire, le matériau et les miroirs formant une cavité OPO,
- un microlaser déclenché de façon active (2,4,6,8,26,32,36,38,42) pour générer un faisceau laser (12) de pompage de la cavité OPO, ce microlaser comportant une cavité formée entre un miroir d'entrée (94,98) et un miroir de sortie (96,100), cette cavité contenant un milieu optique laser (92) et un élément (74) dont l'indice optique est apte à être modulé par une perturbation extérieure, ledit élément (74) étant ainsi inclus dans la cavité du microlaser, la cavité OPO étant incluse à l'intérieur de la cavité laser, le miroir de sortie du microlaser (34) étant confondu avec le miroir de sortie (34) de la cavité OPO, le miroir d'entrée (42) de la cavité OPO étant transparent à la lumière émise par le laser et réfléchissant de la lumière émise par la cavité OPO.

13. Oscillateur selon la revendication 12, **caractérisé en ce que** le miroir de sortie (100) est un miroir concave.

14. oscillateur paramétrique optique comportant :

- un matériau non linéaire OPO (18) et deux miroirs (26,24) disposés de part et d'autre de ce matériau non linéaire (18) et formant une cavité OPO,
- un microlaser de pompage du matériau OPO (18) déclenché activement, ce microlaser comportant une première cavité résonnante formée d'un matériau ( 82) optique laser entre un miroir d'entrée (88) et un miroir intermédiaire (68) et une seconde cavité résonnante formée d'un élément (74) dont l'indice optique est apte à être modulé par une perturbation externe entre ledit miroir intermédiare et un miroir de sortie (89) du microlaser, le miroir de sortie (89) du microlaser constituant le miroir d'entrée (26) de la cavité OPO, et des moyens (88) de réduction de la taille du faisceau laser disposés en entrée de ladite première cavité du microlaser, l'ensemble des deux cavités résonnantes la cavité OPO, et des moyens (88) de réduction du faisceau laser étant monolithique.

15. Oscillateur paramétrique optique selon la revendication 14, les moyens de réduction étant constitués par un miroir concave réalisé avec un micromiroir (88) sur la face du milieu actif laser destinée à être traversée par le faisceau de pompage du microlaser.

**16.** Oscillateur paramétrique optique selon l'une des revendications 14 ou 15, le miroir de sortie (89) étant un miroir concave réalisé avec un micromiroir sur la face de sortie dudit élément (74).

**17.** Oscillateur paramétrique optique selon la revendication 12, lesdits miroirs d'entrée et sortie (94, 98 ; 96,100) formant une cavité Fabry-Pérot, cette cavité étant en limite de stabilité optique, et des moyens (72,73) étant prévus pour faire varier la longueur optique de la cavité de façon à la faire passer d'un état optiquement instable à un état optiquement stable.

**18.** Oscillateur paramétrique optique selon la revendication 17, la cavité étant une cavité hémisphérique, confocale, concentrique ou sphérique.

**19.** Oscillateur paramétrique optique selon l'une des revendications 17 ou 18, ledit élément (74) étant de longueur optique variable.

**20.** Oscillateur paramétrique optique selon la revendication 19, les moyens pour faire varier la longueur optique de la cavité comportant des moyens pour faire varier la longueur dudit élément (74).

**21.** Oscillateur paramétrique optique selon la revendication 19, le matériau constitutif du milieu actif laser (92) et ledit élément (74) étant d'indice optique différent et les moyens pour faire varier la longueur optique de la cavité comportant des moyens (72,73) pour faire varier l'indice optique dudit élément.

**22.** Oscillateur paramétrique optique selon l'une des revendications 19 ou 21, ledit élément étant un matériau électrooptique.

**23.** Oscillateur paramétrique optique selon l'une des revendications précédentes, des moyens étant prévus pour faire varier la longueur d'onde d'émission de l'OPO.

**24.** Oscillateur paramétrique optique selon la revendication 23, la longueur d'onde étant ajustée en faisant varier la température du matériau OPO.

**Patentansprüche**

**1.** Monolithischer optischer parametrischer Oszillator, umfassend:

- ein nichtlineares OPO-Material (40) und zwei Spiegel (42,34), angeordnet beiderseits dieses nichtlinearen Materials, wobei das Material und die Spiegel einen OPO-Resonator bilden,
- einen gütegeschalteten Mikrolaser (36,38,32,34), um einen Pumplaserstrahl für den OPO-Resonators zu erzeugen, wobei der genannte Mikrolaser ein aktives Medium und einen Resonator umfasst, ausgebildet zwischen einem Eingangsspiegel (32) und einem Ausgangsspiegel (34) und passiv gütegeschaltet durch ein sättigbares Absorptionsmaterial (38),

wobei der OPO-Resonator im Innern des Laserresonators eingeschlossen ist, der Ausgangsspiegel des Mikrolasers (34) vereinigt bzw. identisch ist mit dem Ausgangsspiegel (34) des OPO-Resonators, und der Eingangsspiegel (42) des OPO-Resonators durchlässig ist für das Licht, das der Laser abstrahlt, und reflektierend ist für das Licht, das der OPO-Resonator abstrahlt.

**2.** Optischer parametrischer Oszillator nach Anspruch 1, wobei die beiden den OPO-Resonator bildenden Spiegel (42,34) direkt auf dem nichtlinearen OPO-Material abgeschieden sind.

**3.** Optischer parametrischer Oszillator nach einem der vorangehenden Ansprüche, wobei die Reflektierfähigkeiten der Spiegel (42,34) des OPO-Resonators so justiert sind, dass sie einen doppelt oder dreifach schwingenden Resonator bilden.

**4.** Optischer parametrischer Oszillator nach einem der vorangehenden Ansprüche, wobei der OPO-Resonator stabilisiert ist.

**5.** Optischer parametrischer Oszillator nach einem der vorangehenden Ansprüche, wobei das sättigbare Absorptionsmaterial (38) die Form einer direkt auf dem festen aktiven Medium abgeschiedenen Dünnschicht hat.

**6.** Optischer parametrischer Oszillator nach Anspruch 5, wobei die Dünnschicht durch einen organischen Farbstoff gebildet wird, aufgelöst in einem polymeren Lösungsmittel.

**7.** Optischer parametrischer Oszillator nach Anspruch 6, wobei der organische Farbstoff ausgewählt wird zwischen Bis(4-Diethylaminodithiobenzyl)Nickel und Bis(4-Dimethylaminodithiobenzyl)Nickel, und das Lösungsmittel eine Lösung aus Polymethylmethacrylat (PMMA), Polyvinylalkohol oder Polyvinylacetat oder Polystyrol ist.

**8.** Optischer parametrischer Oszillator nach einem der Ansprüche 6 oder 7, wobei die Dünnschicht vorzugsweise mittels Flüssigphasen-Epitaxie abgeschieden worden ist.

**9.** Optischer parametrischer Oszillator nach Anspruch 8, wobei die Dünnschicht durch ein Basismaterial gebildet wird, das mit dem des festen aktiven Mediums identisch ist und mit $Cr^{4+}$- oder $Er^{3+}$-Ionen dotiert ist.

10. Optischer parametrischer Oszillator nach einem der vorangehenden Ansprüche, wobei Einrichtungen zum Variieren der OPO-Emissionswellenlänge vorgesehen sind.

11. Optischer parametrischer Oszillator nach Anspruch 10, wobei die Wellenlänge angepasst bzw. eingestellt wird, indem man die Temperatur des OPO-Materials variiert.

12. Monolithischer optischer parametrischer Oszillator, umfassend:

   - ein nichtlineares OPO-Material (40) und zwei Spiegel (42, 34), angeordnet beiderseits dieses nichtlinearen Materials, wobei das Material und die Spiegel einen OPO-Resonator bilden,
   - einen gütegeschalteten Mikrolaser (2,4,6,8,26,32,36,38,42), um einen Pumplaserstrahl (12) für den OPO-Resonators zu erzeugen, wobei dieser Mikrolaser einen Resonator umfasst, ausgebildet zwischen einem Eingangsspiegel (94,98) und einem Ausgangsspiegel (96,100), und dieser Resonator ein optisches Lasermedium (92) und ein Element (74) umfasst, dessen optischer Index moduliert bzw. angepasst werden kann durch eine äußere Störung, wobei das genannte Element (74) also in den Mikrolaserresonator eingeschlossen ist, der OPO-Resonator ins Innere des Laserresonators eingeschlossen ist, der Ausgangsspiegel des Mikrolasers (34) vereinigt bzw. identisch ist mit dem Ausgangsspiegel (34) des OPO-Resonators, und der Eingangsspiegel (42) des OPO-Resonators durchlässig ist für das Licht, das der Laser abstrahlt, und reflektierend ist für das Licht, das der OPO-Resonator abstrahlt.

13. Oszillator nach Anspruch 12, **dadurch gekennzeichnet, dass** der Ausgangsspiegel (100) ein konkaver Spiegel ist.

14. Optischer parametrischer Oszillator, umfassend:

   - ein nichtlineares OPO-Material (18) und zwei Spiegel (26,24), angeordnet beiderseits dieses nichtlinearen Materials (18), einen OPO-Resonator bildend,
   - einen Pumpmikrolaser für das OPO-Material (18), aktiv gütegeschaltet, wobei dieser Mikrolaser einen ersten Resonator umfasst, gebildet durch ein optisches Lasermaterial (82) zwischen einem Eingangsspiegel (88) und einem Zwischenspiegel (68), und einen zweiten Resonator, gebildet durch ein Element (74), dessen optischer Index durch eine externe Störung moduliert bzw. angepasst werden kann, zwischen dem genannten Zwischenspiegel und einem Ausgangsspiegel (89) des Mikrolasers, wobei der Ausgangsspiegel (89) des Mikrolasers den Eingangsspiegel (26) des OPO-Resonators bildet und die Einrichtungen (88) zur Reduzierung der Größe des Laserstrahis am Eingang des genannten ersten Resonators des Mikrolasers angeordnet sind und dabei das Ganze, gebildet durch die beiden Resonatoren, den OPO-Resonator und die Laserstrahlreduziereinrichtungen (88), monolithisch ist.

15. Optischer parametrischer Oszillator nach Anspruch 14, wobei die Reduziereinrichtungen durch einen konkaven Spiegel in Form eines Mikrospiegel (88) auf der Seite des aktiven Lasermediums gebildet werden, die von dem Pumpstrahl des Mikrolasers durchquert wird.

16. Optischer parametrischer Oszillator nach einem der Ansprüche 14 oder 15, wobei der Ausgangsspiegel (89) ein konkaver Spiegel in Form eines Mikrospiegels auf der Ausgangsseite des genannten Elements (74) ist.

17. Optischer parametrischer Oszillator nach Anspruch 12, wobei die genannten Eingangs- und Ausgangsspiegel (94,98; 96,100) einen Fabry-Perot-Resonator bilden, dieser Resonator an der Grenze der optischen Stabilität ist und Einrichtungen (72,73) vorgesehen sind, um die optische Wellenlänge des Resonators in der Weise zu variieren, dass man von einem optisch instabilen Zustand in einen optisch stabilen Zustand übergeht.

18. Optischer parametrischer Oszillator nach Anspruch 17, wobei der Resonator ein halbkugelförmiger, konfokaler, konzentrischer oder kugelförmiger Resonator ist.

19. Optischer parametrischer Oszillator nach einem der Ansprüche 17 oder 18, wobei das genannte Element (74) von variabler optischer Länge ist.

20. Optischer parametrischer Oszillator nach Anspruch 19, wobei die Einrichtungen zum Variieren der optischen Wellenlänge des Resonators Einrichtungen umfassen, um die Wellenlänge des genannten Elements (74) zu variieren.

21. Optischer parametrischer Oszillator nach Anspruch 19, wobei das das aktive Lasermedium (92) bildende Material und das genannte Element (74) unterschiedliche optische Indices haben, und die Einrichtungen zum Variieren der optischen Wellenlänge des Resonators Einrichtungen (72,73) zum Variieren den optischen Index des genannten Elements umfassen.

22. Optischer parametrischer Oszillator nach einem der Ansprüche 19 oder 21, wobei das genannte Element ein elektrooptisches Material ist.

23. Optischer parametrischer Oszillator nach einem der vorangehenden Ansprüche, wobei Einrichtungen vorgesehen sind, um die Emissionswellenlänge des OPO zu variieren.

24. Optischer parametrischer Oszillator nach Anspruch 23, wobei die Wellenlänge justiert wird, indem man die Temperatur des OPO-Materials variiert.

**Claims**

1. Monolithic optical parametric oscillator comprising:

   - a nonlinear OPO material (40) and two mirrors (42, 34) positioned on either side of said nonlinear material, the material and the mirrors forming an OPO cavity,
   - a switched microlaser (36, 38, 32, 34) for generating a laser beam for pumping the OPO cavity, said microlaser having an active medium and a cavity formed between an input mirror (32) and an output mirror (34) and being passively switched by a saturable absorber material (38),
   - the OPO cavity being included in the interior of the laser cavity, the output mirror of the microlaser (34) coinciding with the output mirror (34) of the OPO cavity, the input mirror (42) of the OPO cavity being transparent to the light emitted by the laser and reflecting the light emitted by the OPO cavity.

2. Optical parametric oscillator according to claim 1, the two mirrors (42, 34) forming the OPO cavity being directly deposited on the OPO nonlinear material.

3. Optical parametric oscillator according to one of the preceding claims, the reflectivities of the OPO cavity mirrors (42, 34) being adjusted to form a doubly or triply resonating cavity.

4. Optical parametric oscillator according to one of the preceding claims, the OPO cavity being stabilized.

5. Optical parametric oscillator according to one of the preceding claims, the saturable absorber (38) being in the form of a thin film of saturable absorber material directly deposited on the solid active medium.

6. Optical parametric oscillator according to claim 5, the film being formed by an organic dye dissolved in a polymer solvent.

7. Optical parametric oscillator according to claim 6, the organic dye being chosen from among bis(4-diethylaminodithiobenzyl) nickel or bis(4-dimethylaminodithiobenzyl) nickel and the solvent being a solution of polymethyl methacrylate, polyvinyl alcohol, polyvinyl acetate or polystyrene.

8. Optical parametric oscillator according to claim 6 or 7, the film being depositable by liquid phase epitaxy.

9. Optical parametric oscillator according to claim 8, the film being formed by a basic material identical to that of the solid active medium and doped with $Cr^{4+}$ or $Er^{3+}$ ions.

10. Optical parametric oscillator according to one of the preceding claims, means being provided for varying the emission wavelength of the OPO.

11. Optical parametric oscillator according to claim 10, the wavelength being adjusted by varying the temperature of the OPO material.

12. Monolithic optical parametric oscillator comprising:

    - a nonlinear OPO material (40) and two mirrors (42, 34) positioned on either side of said nonlinear material, the material and the mirrors forming an OPO cavity,
    - an actively switched microlaser (2, 4, 6, 8, 26, 32, 36, 38, 42) for generating a laser beam (12) for pumping the OPO cavity, said microlaser having a cavity formed between an input mirror (94, 98) and an output mirror (96, 100), said cavity containing an optical laser medium (92) and an element (74), whose optical index can be modulated by an external disturbance, said element (74) consequently being included in the microlaser cavity, the output mirror of the microlaser (34) coinciding with the output mirror (34) of the OPO cavity, the input mirror (42) of the OPO cavity being transparent to the light emitted by the laser and reflecting the light emitted by the OPO cavity.

13. Oscillator according to claim 12, **characterized in that** the output mirror (100) is a concave mirror.

14. Optical parametric oscillator comprising:

    - a nonlinear OPO material (18) and two mirrors (26, 24) positioned on either side of said nonlinear material (18) and forming an OPO cavity,

- a pumping microlaser for the actively switched OPO material (18), said microlaser comprising a first resonant cavity formed by an optical laser material (82) between an input mirror (88) and an intermediate mirror (68), said second resonant cavity being formed by an element (7), whose optical index can be modulated by an external disturbance between said intermediate mirror and an output mirror (89) of the microlaser, the output mirror (89) of the microlaser constituting the input mirror (26) of the OPO cavity and means (88) for reducing the size of the laser beam positioned at the input of said first cavity of the microlaser, the assembly of the two resonant cavities, the OPO cavity and the means (88) for reducing the laser beam being monolithic.

15. Optical parametric oscillator according to claim 14, the reduction means being constituted by a concave mirror implemented with a micromirror (88) on the face of the active laser medium to be traversed by the microlaser pumping beam.

16. Optical parametric oscillator according to one of the claims 14 or 15, the output mirror (89) being a concave mirror implemented with a micromirror on the output face of said element (74).

17. Optical parametric oscillator according to claim 12, the input and output mirrors (94, 98; 96, 100) forming a Fabry-Perot cavity, which is at the optical stability limit, and means (72, 73) are provided for varying the optical length of the cavity so as to pass it from an optically unstable state to an optically stable state.

18. Optical parametric oscillator according to claim 17, the cavity being a hemispherical, confocal, concentric or spherical cavity.

19. Optical parametric oscillator according to one of the claims 17 or 18, said element (74) being of variable optical length.

20. Optical parametric oscillator according to claim 19, the means for varying the optical length of the cavity incorporating means for varying the length of said element (74).

21. Optical parametric oscillator according to claim 19, the constituent material of the active laser medium (92) and said element (74) having a different optical index and the means for varying the optical length of the cavity incorporating means (72, 73) for varying the optical index of said element.

22. Optical parametric oscillator according to one of the claims 19 or 21, said element being an electrooptical material.

23. Optical parametric oscillator according to one of the preceding claims, means being provided for varying the emission wavelength of the OPO.

24. Optical parametric oscillator according to claim 23, the wavelength being adjusted by varying the temperature of the OPO material.

FIG. 1

FIG. 2

FIG. 3

FIG. 4 A

46

FIG. 4 B

48

46

50

48

46

FIG. 4 C

FIG. 4 D

52

50

48

46

56

52

50

48

54

46

FIG. 4 E

FIG. 4 F

FIG. 5

FIG. 6

FIG. 7

FIG. 8

FIG. 9

FIG. 11

117

115

174

168

162

FIG. 10 A

119

117

121

FIG. 10 B